# EUROPÄISCHE PATENTSCHRIFT

(11) **EP 1 477 518 B1**
(45) Veröffentlichungstag und Bekanntmachung des Hinweises auf die Patenterteilung: **23.07.2008**
(21) Anmeldenummer: 04011273.2
(22) Anmeldetag: 12.05.2004
(51) Int. Cl.: C08K 3/34, D06N 1/00

(54) **Bodenbeläge auf Linoleum- oder Krokbasis enthaltend anorganische siliciumhaltige Flammschutzmittel**
Linoleum-based or cork-based floor coverings comprising inorganic silicon-containing flame retarding agents
Revêtements de sol à base de linoléum ou de liège contenant des agents ignifugeants à base de composants contenant du silicium

(30) Priorität: 13.05.2003 DE 10321479
(43) Veröffentlichungstag der Anmeldung: 17.11.2004
(73) Patentinhaber: Armstrong DLW AG, 74321 Bietigheim-Bissingen (DE)
(72) Erfinder: Reichwein, David P., Elizabethtown PA 17022 (US); Ess, Milko, 27751 Delmenhorst (DE); Burmeister, Guido, 27793 Wildeshausen (DE); Schwonke, Karl-Heinz, 74369 Löchgau (DE)
(74) Vertreter: Müller-Boré & Partner Patentanwälte

(56) Entgegenhaltungen:
- WO-A-03/052196
- DE-C- 10 117 922
- US-A- 5 475 041

## Beschreibung

Die vorliegende Erfindung betrifft einen Bodenbelag auf Linoleum-Basis mit verbesserten Flammschutzeigenschaften, umfassend mindestens eine Schicht aus Linoleum, welche mindestens eine siliciumhaltige anorganische Verbindung als Flammschutzmittel in einer Menge von bis zu 40 Gew.-%, bezogen auf die Menge der Linoleum-Schicht, enthält, wobei die siliciumhaltige anorganische Verbindung Perlit ist, sowie ein Verfahren zu dessen Herstellung. Des weiteren betrifft die vorliegende Erfindung einen Bodenbelag auf Kork-Basis mit verbesserten Flammschutzeigenschaften, umfassend mindestens eine siliciumhaltige anorganische Verbindung als Flammschutzmittel in einer Menge von bis zu 40 Gew.-%, bezogen auf die Menge der Korkschicht , wobei die siliciumhaltige anorganische Verbindung Perlit ist.

Bodenbeläge auf Linoleum-Basis sowie Verfahren zu deren Herstellung sind seit langem bekannt. Ein Nachteil der im Stand der Technik bekannten Bodenbeläge auf Linoleum-Basis ist jedoch das nicht unkritische Brandverhalten (Brandprüfung nach DIN 4102 T14, "Radiant Flooring Panel Test"). Seit Juni 2002 sind zudem die Anforderungen an Bodenbeläge durch eine neue EN-Norm verschärft worden. Während ein Linoleum-Fußbodenbelag vorher eine sogenannte kritische Strahlungsintensität von ≥ 4,5 kW/m² nach DIN 4102 T14 erreichen mußte, um in die ökonomisch wichtige Baustoffklasse B1 eingeordnet zu werden, werden Bodenbeläge, insbesondere Linoleum, mit einem Testergebnis von ≥ 4,5 kW/m² durch die Einführung der neuen Testmethode nach EN ISO 9239-1 und EN ISO 11925-2, die sich zwar an die alte Prüfung DIN 4102 T14 anlehnt, deren Klassifizierung aber nun nach DIN EN 13501-1 erfolgt, nicht mehr in B1, sondern in C_{fl} eingestuft. Daraus können gegenüber anderen Kunststoffbodenbelägen wie beispielsweise PVC erhebliche Wettbewerbsnachteile entstehen. Erst bei einer kritischen Strahlungsintensität von ≥ 8 kW/m² ist die Einstufung in die wirtschaftlich wichtige Baustoffklasse B_{fl} möglich. Das nicht unkritische Brandverhalten ist auch ein Nachteil der im Stand der Technik bekannten Bodenbeläge auf Kork-Basis.

Somit liegt der vorliegenden Erfindung die Aufgabe zugrunde, einen Bodenbelag auf Linoleum-Basis bzw. Kork-Basis bereitzustellen, der ein deutlich verbessertes Brandverhalten bei ansonsten im wesentlichen gleichbleibenden Materialeigenschaften im Vergleich zu im Stand der Technik bekannten Linoleum- oder Kork-Bodenbelägen aufweisen soll.

Diese Aufgabe wird durch die in den Ansprüchen gekennzeichneten Gegenstände gelöst.

Insbesondere wird ein Bodenbelag auf Linoleum-Basis bereitgestellt, umfassend mindestens eine Schicht aus Linoleum, welche mindestens eine siliciumhaltige anorganische Verbindung als Flammschutzmittel in einer Menge von bis zu etwa 40 Gew.-%, vorzugsweise in einer Menge im Bereich von 0,2 bis 30 Gew.-%, mehr bevorzugt im Bereich von 2 bis 18 Gew.-%, bezogen auf die Menge der Linoleum-Schicht, enthält, wobei die siliciumhaltige anorganische Verbindung Perlit ist .

In der vorliegenden Erfindung wird als die siliciumhaltige anorganische Verbindung Perlit eingesetzt. Ein solcher erfindungsgemäß eingesetzter Perlit kann sowohl expandiert als auch nichtexpandiert sein.

Durch den Einsatz von Perlit, vorzugsweise wärmebehandeltem Perlit ("Perlstein", vulkanisches Naturgestein, welches kurz auf über 1000°C erhitzt wird, wobei das im Stein enthaltene Wasser den Perlit bis auf das 20-fache seines ursprünglichen Volumens aufbläht, auch "Puffperlit" genannt), wird eine Verbesserung des Brandverhaltens eines Bodenbelags auf Linoleum-Basis und ein kritischer Strahlungsstärkewert beim B_{fl}-Test von >8 kW/m² erreicht. Darüberhinaus sind Perlite im allgemeinen praktisch farblos und haben damit als Bestandteil im erfindungsgemäßen Bodenbelag keinen Einfluß auf die äußere Erscheinung des Bodenbelags beispielsweise auf Linoleum-Basis, was einen Vorteil im Vergleich zur Verwendung von beispielsweise Blähgraphit als Flammschutzmittel (vgl. WO 02/081812) darstellt.

Im erfindungsgemäßen Bodenbelag kann beispielsweise der im Stand der Technik bekannte Füllstoff Holzmehl (organisch, brennbar) gegen Perlit, vorzugsweise wärmebehandelten Perlit (anorganisch, nicht brennbar), ausgetauscht werden. Tauscht man Holzmehl gegen andere anorganische Füllstoffe (Kreide, ATH) aus, läßt sich die Brandklasse B_{fl} innerhalb der engen Rezepturgrenzen, die eine Verarbeitung noch möglich machen, nicht erreichen. Erfindungsgemäß wurde jedoch festgestellt, daß überraschenderweise die Brandklasse B_{fl} mit Perlit, vorzugsweise wärmebehandeltem Perlit, erreicht wird.

Durch Einsatz von Perlit, vorzugsweise wärmebehandeltem Perlit, muß der Zementanteil in der Rezeptur für die Linoleum-Schicht verringert werden, da Perlit die flüssigen Anteile im Zement weniger gut als beispielsweise Holzmehl aufnehmen kann. Dadurch wird die Rezeptur noch anorganischer als durch den Einsatz von Perlit ohnehin schon. Perlit, vorzugsweise wärmebehandelter Perlit, ist billiger als beispielsweise Phosphor-Verbindungen, die als Flammschutzmittel in Frage kommen. Außerdem steigt die Dimensionsstabilität des erfindungsgemäßen Linoleum-Bodenbelags, da aufgrund des geringeren Füllstoffanteils von beispielsweise Holzmehl eine geringere Feuchtigkeitsempfindlichkeit vorhanden ist. Gleichzeitig ergibt der Einsatz von Perlit, der in der Regel eine feinere Struktur aufweist, eine glattere Oberfläche im Vergleich zu anderen im Stand der Technik bekannten Füllstoffen wie beispielsweise Holzmehl, das in der Regel eine gröbere Struktur aufweist. Ferner ergibt die erfindungsgemäße Verwendung von Perlit, vorzugsweise wärmebehandeltem Perlit, eine härtere Oberfläche, was sich günstig bei Abrieb und Reinigungsverhalten (Anschmutzung) des erfindungsgemäßen Bodenbelags bemerkbar macht.

In der Schicht aus Linoleum zusätzlich verwendbare Flammschutzmittel unterliegen keiner besonderen Beschränkung und es können beispielsweise die im Stand der Technik bekannten Flammschutzmittel aus der Gruppe der verkohlungsfördernden und feuererstickenden Flammschutzmittel, wie Ammoniumphosphat oder Dipentaerythrit, der sperrschichtbildenden Flammschutzmittel, wie Wasserglas, Borate und Ammoniumpolyphosphate, der festen anorganischen Flammschutzmittel und der dämmschichtbildenden Flammschutzmittel bzw. Intumeszenzmittel eingesetzt werden. Als zusätzliche Flammschutzmittel können ferner anorganische oder organische Phosphorverbindungen, halogenierte organische Verbindungen, wie Chlorparaffine, oder halogenierte organische Phosphorverbindungen verwendet werden. Unter festen anorganischen Flammschutzmitteln werden beispielsweise anorganische Verbindungen, wie Aluminiumoxidhydrate, Borate, z.B. Zinkborate, Ammoniumphosphate, Antimonoxide, Aluminiumhydroxide, vorzugsweise Aluminiumtrihydroxid, und Magnesiumhydroxid verstanden, wobei Aluminiumhydroxid und Magnesiumhydroxid auch als wasserabspaltende Flammschutzmittel bezeichnet werden. Der Anteil der festen anorganischen Flammschutzmittel beträgt vorzugsweise bis zu etwa 60 Gew.-%, besonders bevorzugt bis zu etwa 30 Gew.-%, bezogen auf die Menge der Linoleum-Schicht. Besonders bevorzugt ist das feste anorganische Flammschutzmittel Aluminiumtrihydroxid. Diese Flammschutzmittel können einzeln oder als mindestens zwei dieser Flammschutzmittel (aus der gleichen oder unterschiedlichen, vorstehend aufgeführten Gruppen) enthaltendes Gemisch in der Linoleum-Schicht vorliegen.

In einer bevorzugten Ausführungsform wird neben Perlit mindestens ein phosphorhaltiges Flammschutzmittel verwendet. Das phosphorhaltige Flammschutzmittel umfaßt mindestens eine Phosphor-enthaltende Verbindung. Beispiele für Phosphor-enthaltende Verbindungen sind vorzugsweise aus der Gruppe Phosphat, Phosphit, Phosphonat oder dessen Salze, organisch substituiertes Phosphonat oder dessen Salze, Phosphinat oder dessen Salze, organisch substituiertes Phosphinat oder dessen Salze und Gemischen davon ausgewählt. Beispiele für organisch substituierte Phosphonate sind cyclische oder acyclische Ester organischer Phosphorsäuren wie Diester, z.B. Dimethylpropanphosphonat. Besonders bevorzugt ist die Verwendung von mindestens einem Phosphinat neben Perlit. Das phosphorhaltige Flammschutzmittel kann beispielsweise in einer Menge von bis zu etwa 20 Gew.-%, vorzugsweise in einer Menge im Bereich von 0,1 bis 10 Gew.-%, mehr bevorzugt im Bereich von 0,1 bis 6 Gew.-%, bezogen auf die Menge der Linoleum-Schicht, eingesetzt werden.

Durch zusätzliches Einarbeiten von Wasserglas lassen sich ferner die Verarbeitungseigenschaften deutlich verbessern (d.h. in der Mischmasse bildet sich ein "inneres Gerüst" aus und verstrammt somit die Mischmasse) und die Reifezeit kann beträchtlich verkürzt werden. Das verwendbare Wasserglas, welches ein sperrschichtbildendes Flammschutzmittel ist, ist beispielsweise Natronwasserglas. Es kann auch ein Gemisch von mindestens zwei unterschiedlichen sperrschichtbildenden Flammschutzmitteln, d.h. Wasserglas in Kombination mit einem oder mehreren z.B. vorstehend beschriebenen sperrschichtbildenden Flammschutzmitteln in der Linoleum-Schicht verwendet werden. Wasserglas kann in der Schicht aus Linoleum in einer Menge von bis zu etwa 15 Gew.-%, bezogen auf die Menge der Linoleum-Schicht, vorhanden sein.

Im Gegensatz zur herkömmlichen Auffassung, daß hochalkalische Substanzen zerstörend auf die Struktur des Linoleums wirken, kann beim zusätzlichen Einsatz von Wasserglas in Anteilen bis zu 15% überraschenderweise festgestellt werden, daß der pH-Wert über die im Linoleumzement natürlich enthaltenen Säuren und die bei der Zement-Kochung und der Reifung entstehenden Säuren reguliert wird.

Ferner kann bei Verwendung von beispielsweise Natronwasserglas festgestellt werden, daß dieses Wasserglas grundsätzlich langkettig polykondensiert und dadurch ein "inneres Gerüst" in der Linoleummasse gebildet wird, was im Zusammenhang mit der oxidativen Reifung des Linoleums zu einem schneller härtenden Material mit verbesserten Eigenschaften hinsichtlich beispielsweise Brandverhalten, Härtegrad, Flexibilität, Abrieb, etc., führt. Darüber hinaus können bei Verwendung von Wasserglas in Verbindung mit flüssigen/viskosen Flammschutzmitteln die verstrammenden Eigenschaften von Wasserglas durch einen Verseifungsprozeß des flüssigen/viskosen Flammschutzmittels annähernd aufgehoben werden, wobei die freiwerdenden Salze als pH-Puffer wirken und die Linoleummasse im wesentlichen pH-neutral gehalten werden kann.

Des weiteren umfaßt die Schicht aus Linoleum übliche Komponenten, wie Bindemittel (sog. Bedford-Zement oder B-Zement aus einem teiloxidierten Leinöl und mindestens einem Harz als Klebrigmacher), mindestens einen Füllstoff und ggf. mindestens ein Färbemittel. Als Füllstoff werden üblicherweise Weichholzmehl und/oder Korkmehl (bei gleichzeitiger Anwesenheit von Holzmehl und Korkmehl typischerweise im Gewichtsverhältnis 90:10) und/oder Kreide, Kaolin (China-Clay), Kieselgur und Schwerspat verwendet. Zusätzlich kann zur Verstrammung der Masse als Füllstoff gefällte Kieselsäure und geringe Mengen Wasserglas, beispielsweise Wasserglas in einer Menge von bis zu 15 Gew.-%, bezogen auf die Menge der Schicht, zugegeben werden.

Die Linoleum-Mischmasse enthält üblicherweise mindestens ein Färbemittel, wie ein Pigment (z.B. Titandioxid), und/oder andere übliche Färbemittel auf Basis von anorganischen und organischen Farbstoffen. Als Färbemittel können jegliche natürliche oder synthetische Farbstoffe sowie anorganische oder organische Pigmente, allein oder in beliebiger Kombination, verwendet werden.

Eine typische Linoleum-Zusammensetzung enthält, bezogen auf das Gewicht der Linoleum-Schicht, etwa 40 Gew.-% Bindemittel, etwa 30 Gew.-% organische Stoffe, etwa 20 Gew.-% anorganische (mineralische) Füllstoffe und etwa 10 Gew.-% Färbemittel. Ferner können in der Linoleum-Mischmasse übliche Additive, wie Verarbeitungshilfsmittel, Antioxidantien, UV-Stabilisatoren, Gleitmittel und dergleichen enthalten sein, die in Abhängigkeit des Bindemittels ausgewählt werden.

Darüber hinaus kann der erfindungsgemäße Bodenbelag auf Linoleum-Basis auch elektrisch leitfähig durch Zusatz mindestens eines Derivats des Imidazols, Imidazolins, Benzimidazols oder Morpholins oder einer kationenaktiven Verbindung wie ein quaternäres Ammoniumsalz, z.B. Tetraalkylammoniumsalz, (vgl. DE 34 16 573 und WO 99/10592) und/oder durch Anordnen einer Schicht auf Linoleum-Basis, welche mindestens einen elektrisch leitfähigen Füllstoff, beispielsweise Ruß oder Metallpulver, enthält, unter die Linoleum-Schicht ausgebildet sein. Selbstverständlich kann auch eine derartige elektrisch leitfähige Schicht weiter ein oder mehrere der vorgenannten Flammschutzmittel enthalten.

Die Linoleum-Schicht weist vorzugsweise eine Dicke von 0,9 bis 6,0 mm, besonders bevorzugt 1,4 bis 4 mm, auf.

Der erfindungsgemäße Bodenbelag auf Linoleum-Basis kann trägerlos (vgl. DE 199 10 389 A1) sein oder einen Träger umfassen. Als Trägermaterial kann ein Material auf Basis natürlicher oder synthetischer Gewebe oder Gewirke sowie Textilwerkstoffe eingesetzt werden. Als Beispiele können Jutegewebe, Mischgewebe aus natürlichen Fasern, wie Baumwolle und Zellwolle, Glasfasergewebe, mit Haftmittel beschichtetes Glasfasergewebe, Mischgewebe aus Synthesefaser, Gewebe aus Kern/Mantelfasern mit z.B. einem Kern aus Polyester und einer Ummantelung aus Polyamid, genannt werden. Als Haftvermittler für Glasfasergewebe kann beispielsweise eine Beschichtung der Glasfasern aus einem Styrol-Butadien-Latex verwendet werden.

Der erfindungsgemäße Bodenbelag kann mit oder ohne Träger ausgebildet sein, wobei die Linoleum-Schicht sowohl einschichtig als auch mehrschichtig gestaltet sein kann, wobei der Gehalt an Perlit bzw. weiterer Flammschutzmittel wie beispielsweise phosphorhaltige Flammschutzmittel bei mehrschichtiger Ausgestaltung der Linoleum-Schicht in den jeweiligen Schichten gleich oder unterschiedlich sein kann, beispielsweise nur in einer Schicht vorhanden sein kann. Weiter ergeben sich je nach Schichtfolge sowohl symmetrische als auch asymmetrische Flächengebilde, wobei bei trägerlosen Linoleum-Flächengebilden symmetrische Aufbauten bevorzugt sind. Beispielsweise kann der erfindungsgemäße Bodenbelag zwei Schichten aus Linoleum umfassen (materialhomogen), die gleich oder verschieden sein können.

Weiterhin kann unter der Linoleum-Schicht eine Korkmentschicht mit oder ohne Träger angeordnet sein. Korkment ist eine Mischung, die B-Zement und gemahlenen Kork als Füllstoff enthält und bei Bodenbelägen als isolierende Unterschicht für eine bessere Wärmeisolierung, Trittelastizität und Gehkomfort sorgt und den Tritt- und Raumschall dämpft. Auch eine derartige Korkmentschicht kann weiter ein oder mehrere der vorgenannten Flammschutzmittel umfassen.

Daneben können auch unter oder zwischen zwei Linoleumschichten funktionale Schichten angeordnet sein, so daß sich drei- oder mehrschichtige Flächengebilde ergeben. Beispielsweise kann unter der Linoleum-Schicht des erfindungsgemäßen Bodenbelags mindestens eine weitere Schicht, vorzugsweise eine Schaumschicht, eine Schicht zur Trittschalldämmung und/oder eine Isolationsschicht angeordnet sein. Die Schichtdicken der aufgebrachten Schichten können gleich oder verschieden sein. Alle diese unter oder zwischen zwei Linoleumschichten angeordneten funktionale Schichten können ebenfalls jeweils weiter ein oder mehrere der vorgenannten Flammschutzmittel enthalten.

Ferner kann auf der Rückseite des erfindungsgemäßen Bodenbelags ohne Träger mindestens eine Klebeschicht angeordnet sein.

Darüberhinaus kann der erfindungsgemäße Bodenbelag eine Deck- oder Lackschicht aus beispielsweise Acrylat oder Materialien auf Basis nachwachsender Rohstoffe aufweisen, wie insbesondere ein Polyreaktionsprodukt-enthaltendes Material, welches als Bindemittel das Reaktionsprodukt von mindestens einer Di- oder Polycarbonsäure oder deren Derivate oder einem Gemisch davon mit mindestens einem Epoxidierungsprodukt und gegebenenfalls einem Füllstoff enthält. Letzteres Material ist in der WO 98/28356 beschrieben, auf die hier explizit Bezug genommen wird. Die Deck- oder Lackschicht kann weiter ein oder mehrere der vorgenannten Flammschutzmittel enthalten.

Der erfindungsgemäße Bodenbelag auf Linoleum-Basis kann in Form von Bahnen oder Fliesen vorliegen.

Beispielsweise kann der erfindungsgemäße Bodenbelag auf Linoleum-Basis durch übliche Verfahren zur Herstellung ein- oder mehrschichtiger Linoleum-Bodenbeläge mit oder ohne Träger hergestellt werden. Vorzugsweise wird bei der Verarbeitung von Linoleumzementen, die gemäß den Anforderungen von DIN EN 548 aus trocknenden Pflanzenölen bzw. -fetten und Baumharzen hergestellt werden, bereits auf der Stufe des Öloxidationsprozesses Phosphate, Phosphite, Phosphonate oder deren Salze, organisch substituierte Phosphonate oder deren Salze, Phosphinate oder deren Salze, organisch substituierte Phosphinate oder deren Salze oder Gemische davon zugegeben, um eine Reaktion der vorstehend genannten Phosphorverbindungen z.B. mit freien Doppelbindungen oder eine Veresterung mit vorhandenen OH-Gruppen zu bewirken oder zumindest eine innige Anbindung (Vermischung) an den Linoleum-Zement zu erreichen.

Ferner stellt die vorliegende Erfindung ein übliches Verfahren zur Herstellung eines Bodenbelags auf Linoleum-Basis bereit, umfassend mindestens eine Schicht aus Linoleum, welche mindestens eine siliciumhaltige anorganische Verbindung als Flammschutzmittel in einer Menge von bis zu 40 Gew.-%, bezogen auf die Menge der Linoleum-Schicht, enthält, wobei die siliciumhaltige anorganische Verbindung Perlit ist, worin die Linoleum-Mischmasse, welche mindestens eine siliciumhaltige anorganische Verbindung enthält, mittels Kalandern oder Walzwerken zu einem Bodenbelag mit oder ohne Juteträger verarbeitet wird. Gemäß einer bevorzugten Ausführungsform kann, wie vorstehend definiert, auch zusätzlich mindestens eines der vorstehend genannten Flammschutzmittel eingesetzt werden.

Die vorliegende Erfindung stellt ferner einen Bodenbelag auf Kork-Basis bereit, umfassend mindestens eine siliciumhaltige anorganische Verbindung als Flammschutzmittel in einer Menge von bis zu etwa 40 Gew.-%, bezogen auf die Menge der Kork-Schicht, wobei die siliciumhaltige anorganische Verbindung Perlit ist.

In dem Bodenbelag auf Kork-Basis zusätzlich verwendbare Flammschutzmittel unterliegen keiner besonderen Beschränkung und es können beispielsweise die im Stand der Technik bekannten Flammschutzmittel aus der Gruppe der verkohlungsfördernden und feuererstickenden Flammschutzmittel, wie Ammoniumphosphat oder Dipentaerythrit, der sperrschichtbildenden Flammschutzmittel, wie Wasserglas, Borate und Ammoniumpolyphosphate, der festen anorganischen Flammschutzmittel und der dämmschichtbildenden Flammschutzmittel bzw. Intumeszenzmittel eingesetzt werden. Als zusätzliche Flammschutzmittel können ferner anorganische oder organische Phosphorverbindungen, halogenierte organische Verbindungen, wie Chlorparaffine, oder halogenierte organische Phosphorverbindungen verwendet werden. Unter festen anorganischen Flammschutzmitteln werden beispielsweise anorganische Verbindungen, wie Aluminiumoxidhydrate, Borate, z.B. Zinkborate, Ammoniumphosphate, Antimonoxide, Aluminiumhydroxide, vorzugsweise Aluminiumtrihydroxid, und Magnesiumhydroxid verstanden, wobei Aluminiumhydroxid und Magnesiumhydroxid auch als wasserabspaltende Flammschutzmittel bezeichnet werden. Bevorzugt ist das feste anorganische Flammschutzmittel Aluminiumtrihydroxid. Diese Flammschutzmittel können einzeln oder als mindestens zwei dieser Flammschutzmittel (aus der gleichen oder unterschiedlichen, vorstehend aufgeführten Gruppen) enthaltendes Gemisch in der Kork-Schicht vorliegen.

In einer bevorzugten Ausführungsform wird neben Perlit als bevorzugte siliciumhaltige anorganische Verbindung mindestens ein phosphorhaltiges Flammschutzmittel verwendet. Das phosphorhaltige Flammschutzmittel umfaßt mindestens eine Phosphor-enthaltende Verbindung. Beispiele für Phosphor-enthaltende Verbindungen sind vorzugsweise aus der Gruppe Phosphat, Phosphit, Phosphonat oder dessen Salze, organisch substituiertes Phosphonat oder dessen Salze, Phosphinat oder dessen Salze, organisch substituiertes Phosphinat oder dessen Salze und Gemischen davon ausgewählt. Beispiele für organisch substituierte Phosphonate sind cyclische oder acyclische Ester organischer Phosphorsäuren wie Diester, z.B. Dimethylpropanphosphonat. Besonders bevorzugt ist die Verwendung von mindestens einem Phosphinat neben Perlit. Das phosphorhaltige Flammschutzmittel kann beispielsweise in einer Menge von bis zu etwa 20 Gew.-%, vorzugsweise in einer Menge im Bereich von 0,1 bis 10 Gew.-%, mehr bevorzugt im Bereich von 0,1 bis 6 Gew.-%, bezogen auf die Menge der Kork-Schicht, eingesetzt werden.

In einer weiteren bevorzugten Ausführungsform enthält der Bodenbelag auf Kork-Basis neben Perlit, vorzugsweise wärmebehandeltem Perlit, als Flammschutzmittel Wasserglas, wobei Wasserglas vorzugsweise in einer Menge von bis zu etwa 15 Gew.-%, bezogen auf die Menge der Kork-Schicht, enthalten ist.

Zur Herstellung eines derartigen erfindungsgemäßen Kork-Bodenbelags wird üblicherweise Korkgranulat einer bestimmten Korngrößenverteilung und Restfeuchte (vorzugsweise 1,5 - 3,0 %) mit Melamin-Formaldehyd-Harz als Bindemittel sowie das vorstehend beschriebene erfindungsgemäß verwendete Flammschutzmittel und einem herkömmlichen Vernetzungskatalysator gemischt, wobei üblicherweise der Bindemittelanteil dabei 10-30 Gew.-% beträgt, da ein Teil des Bindemittels von den flammhemmenden Additiven gebunden wird. Dieses Gemisch wird in dickwandige Stahlformen (beispielhafte Maße: Breite 700 mm, Länge 1000 mm, Höhe 800 mm) gefüllt und verdichtet (vorzugsweise 10 - 200 t). Die Vernetzung erfolgt beispielsweise bei 110 - 135°C innerhalb von 8 bis 22 Stunden. Die derart aus Korkgranulat gefertigten Blöcke (mit zum Beispiel einer Resthöhe von 100 - 300 mm je nach Verdichtungsgrad/Druck) werden dann in einzelne Platten mittels einer Bandschneideanlage geschnitten/geschält. Die Plattenstärke kann beispielsweise zwischen 1 und 10 mm betragen. Um eine glatte und konturenscharfe Oberfläche zu erzielen, werden die Platten üblicherweise mittels einer Bandschleifmaschine geschliffen und kalibriert. Die Oberseite wird dabei vorzugsweise mit 3 bis 6 Schleifvorgängen, zunächst mit groben Schleifkorn und zuletzt mit feinem Schleifkorn, geschliffen (beispielsweise 1.= 40er Korn, 2.= 80er Korn, 3. =120er Korn, 4.=180er Korn, 5.= 220er Korn, 6.= 360er Korn). Die Unterseite wird lediglich mit 1-2 Schleifgängen geschliffen, zum Beispiel mit 24er und 40er Korn. Die Platten können anschließend mit einem Oberflächenschutz ausgestattet werden. Dies kann beispielsweise mit einer PVC-Klarfolie (K-Wert 60 oder 80), einem Lack (Fa. PPG oder Lott) oder Wachs (zum Beispiel Wachstype: Solid-Floer-Wax, Fa. Loba, Ditzingen Deutschland) erfolgen. Aus den beschichteten Platten können anschließend fliesenförmige Platten gestanzt und gegebenenfalls die Kanten mittels Schneidmesser gesäubert werden. Die derartig gefertigten Korkplatten erreichen nach EN ISO 9239-1 eine kritische Bestrahlungsstärke von größer als 8 kW/m² und eine Brandfortschreitung von kleiner als 150 mm innerhalb 20 Sekunden, was eine Klassifizierung nach DIN EN 13501-1:1999 von B_{fl} entspricht.

Die vorliegende Erfindung sowie weitere sich daraus ergebende Vorteile werden in der nachfolgenden Beschreibung unter Bezugnahme auf die in den Beispielen beschriebenen Ausführungsformen näher erläutert.

### Beispiele

### Linoleum-Bodenbelag

Zunächst werden alle in der nachstehenden Tabelle 1 aufgelisteten Komponenten für die Linoleum-Masse in einem geeigneten Mischaggregat zu einer möglichst homogenen Grundmasse (Mischmasse) vermischt. Die so erhaltene Mischmasse wird durch ein Walzwerk zu Fellen verarbeitet und einem Kratzer bzw. Granulator zugeführt, wonach die dadurch erhaltenen Mischmassepartikel einem Kalander zugeführt werden und unter Druck und einer Temperatur von üblicherweise 10°C bis 150°C auf Jute als Trägermaterial gepreßt werden.

In Tabelle 1 ist beispielhaft eine erfindungsgemäße Rezeptur aufgelistet, wobei sich die angegebenen Werte auf Gew.-%, bezogen auf die Menge der Gesamtmischung (Linoleum-Schicht), beziehen. Die in Tabelle 1 angegebenen einzelnen Bestandteile der Rezeptur sind so auszuwählen, daß sich für jede spezifische Rezeptur für die Linoleum-Schicht der Wert 100 Gew.-% ergibt.

**Tabelle 1**

| Rezeptur | (Gew.-%) |
|---|---|
| Lino-Zement | 30-55 |
| Korkmehl | 0-25 |
| Holzmehl | 5-45 |
| Kreide | 0-60 |
| Titandioxid | 1-15 |
| Buntpigmente | 0-5 |
| Kieselgur | 0-8 |
| Zinkoxid | 0-5 |
| Aluminiumtrihydroxid | 0-60 |
| (Wärmebehandelter) Perlit | 0,01-30 |
| Flammschutzmittel | 0-30 |

**Tabelle 2**

| Zusammensetzung | Standard | 312 | 313 | 314 |
|---|---|---|---|---|
| Lino-Zement, Holzmehl, Kreide, Titanoxid, Zinkoxid, Pigmente % | 100 | 91 | 82 | 73 |
| (Wärmebehandelter) Perlit % | | 9 | 18 | 27 |

**Tabelle 3**

| Zusammensetzung | | Anforderung neuer Standard B_{fl} | Brennstrecke [cm] | kritische Strahlungsintensität [kW / m²] | Rauchgasdichte [% x min] |
|---|---|---|---|---|---|
| Standard | | > 8,0 kW/m² | 31 | 7,30 | 145 |
| 312 | | > 8,0 kW/m² | 22 | 9,23 | 25 |
| 313 | | > 8,0 kW/m² | 17 | 10,16 | 59 |
| 314 | | > 8,0 kW/m² | 9 | 11,00 | 123 |

Hier verwendeter wärmebehandelter Perlit: Körnung 40 µm, Schüttdichte (kg/m³) 70 ± 15%, Chemische Zusammensetzung SiO₂ 60-75%, Al₂O₃ 12-16%, Na₂O 5-10%, K₂O 2-5%, CaO 0-2%, MgO 0-1%, Fe₂O₃ 0-1%, gebundenes H₂O 1-2%, Reindichte 2,0-2,2 g/cm³, Farbe weiß, pH-Wert 6-8,5, Temperaturbeständigkeit bis 800°C, Fließpunkt ca. 1400°C, nicht brennbar, organische Bestandteile unter 0,1 Gew.-%.

Die in Tabelle 1 aufgeführte Rezeptur, die in Tabelle 2 gezeigten konkreten Zusammensetzungen 312, 313 und 314 bzw. die daraus hergestellten Linoleum-Bodenbeläge zeigen aufgrund des erfindungsgemäß verwendeten wärmebehandelten Perlits drastisch verbesserte Flammschutzeigenschaften im Vergleich zu einem herkömmlichen Linoleum-Bodenbelag ohne Perlit ("Standard" in Tabellen 2 und 3) bei ansonsten im wesentlichen gleichbleibenden Eigenschaften, was anhand der Werte in Tabelle 3 nachvollzogen werden kann.

## Patentansprüche

1. Bodenbelag auf Linoleum-Basis, umfassend mindestens eine Schicht aus Linoleum, welche mindestens eine siliciumhaltige anorganische Verbindung als Flammschutzmittel in einer Menge von bis zu 40 Gew.-%, bezogen auf die Menge der Linoleum-Schicht, enthält,
wobei die siliciumhaltige anorganische Verbindung Perlit ist.

2. Bodenbelag nach Anspruch 1, wobei der Perlit ein wärmebehandelter Perlit ist.

3. Bodenbelag nach Anspruch 2, wobei der Perlit bei einer Temperatur von etwa 1000°C oder darüber wärmebehandelt worden ist.

4. Bodenbelag nach einem der vorhergehenden Ansprüche, wobei die Schicht aus Linoleum zusätzlich ein Flammschutzmittel aus der Gruppe von verkohlungsfördernden und feuererstickenden Flammschutzmitteln, sperrschichtbildenden Flammschutzmitteln, Intumeszenzmitteln, festen anorganischen Flammschutzmitteln oder mindestens zwei dieser zusätzlichen Flammschutzmittel enthaltende Gemische umfaßt.

5. Bodenbelag nach Anspruch 4, wobei das zusätzliche Flammschutzmittel mindestens ein phosphorhaltiges Flammschutzmittel umfaßt.

6. Bodenbelag nach Anspruch 5, wobei das phosphorhaltige Flammschutzmittel aus der Gruppe Phosphat, Phosphit, Phosphonat oder dessen Salze, organisch substituiertes Phosphonat oder dessen Salze, Phosphinat oder dessen Salze, organisch substituiertes Phosphinat oder dessen Salze und Gemischen davon ausgewählt ist.

7. Bodenbelag nach Anspruch 5 oder 6, wobei das phosphorhaltige Flammschutzmittel mindestens ein Phosphinat oder dessen Salz, ein organisch substituiertes Phosphinat oder dessen Salz oder ein Gemisch davon umfaßt.

8. Verfahren zur Herstellung eines Bodenbelags auf Linoleum-Basis, umfassend mindestens eine Schicht aus Linoleum, welche mindestens eine siliciumhaltige anorganische Verbindung als Flammschutzmittel in einer Menge von bis zu 40 Gew.-%, bezogen auf die Menge der Linoleum-Schicht, enthält, worin die Linoleum-Mischmasse, welche mindestens ein Flammschutzmittel enthält, mittels Kalandern oder Walzwerken zu einem Bodenbelag verarbeitet wird,
wobei die siliciumhaltige anorganische Verbindung Perlit ist.

9. Bodenbelag auf Kork-Basis, umfassend mindestens eine siliciumhaltige anorganische Verbindung als Flammschutzmittel in einer Menge von bis zu 40 Gew.-%, bezogen auf die Menge der Kork-Schicht,
wobei die siliciumhaltige anorganische Verbindung Perlit ist.

10. Verwendung einer siliciumhaltigen anorganischen Verbindung als Flammschutzmittel in Bodenbelägen auf Linoleum- oder Kork-Basis,
wobei die siliciumhaltige anorganische Verbindung Perlit ist.

## Claims

1. A linoleum-based floor covering, comprising at least one linoleum layer, which contains at least one silicon-containing inorganic compound as a flame retardant in an amount of up to 40% by weight relative to the amount of the linoleum layer, wherein the silicon-containing inorganic compound is perlite.

2. The floor covering according to claim 1, wherein the perlite is a heat-treated perlite.

3. The floor covering according to claim 2, wherein the perlite has been heat-treated at a temperature of approximately 1000°C or above.

4. The floor covering according to any one of the preceding claims, wherein the linoleum layer furthermore comprises a flame retardant from the group of char-forming and fire-blanketing flame retardants, barrier-forming flame retardants, intumescent agents, solid inorganic flame retardants or mixtures containing at least two of these additional flame retardants.

5. The floor covering according to claim 4, wherein the additional flame retardant comprises at least one phosphorus-containing flame retardant.

6. The floor covering according to claim 5, wherein the phosphorus-containing flame retardant is selected from the group of phosphate, phosphite, phosphonate or its salts, organically substituted phosphonate or its salts, phosphinate or its salts, organically substituted phosphinates or its salts, and mixtures thereof.

7. The floor covering according to claim 5 or 6, wherein the phosphorus-containing flame retardant comprises at least a phosphinate or its salt, an organically substituted phosphinate or its salt, or a mixture thereof.

8. A method for producing a linoleum-based floor covering, comprising at least one linoleum layer, which contains at least one silicon-containing inorganic compound as a flame retardant in an amount of up to 40% by weight relative to the amount of the linoleum layer, wherein the linoleum mixed mass, which contains at least one flame retardant, is processed into a floor covering by means of calenders or roll mills, wherein the silicon-containing inorganic compound is perlite.

9. A cork-based floor covering, comprising at least one silicon-containing inorganic compound as a flame retardant in an amount of up to 40% by weight relative to the amount of the cork layer, wherein the silicon-containing inorganic compound is perlite.

10. Use of a silicon-containing inorganic compound as a flame retardant in linoleum- or cork-based floor coverings, wherein the silicon-containing inorganic compound is perlite.

## Revendications

1. Revêtement de sol à base de linoléum, comprenant au moins une couche de linoléum, laquelle contient au moins un composé inorganique contenant du silicium comme un agent ignifugeant, en une quantité de allant jusqu'à 40 % en poids, basé sur le poids de la couche de linoléum,
le composé inorganique contenant du silicium étant de la perlite.

2. Revêtement de sol selon la revendication 1, la perlite étant une perlite traitée thermiquement.

3. Revêtement de sol selon la revendication 2, la perlite étant traitée thermiquement à une température d'environ 1 000°C ou plus.

4. Revêtement de sol selon l'une quelconque des revendications précédentes, la couche de linoléum comprenant en outre un agent ignifugeant choisi parmi le groupe des agents ignifugeants favorisant la carbonisation et étouffant le feu, des agents ignifugeants formant une couche d'arrêt, des agents intumescents, des agents ignifugeants inorganiques solides ou au moins deux de ces agents contenant des ignifugeants additionnels.

5. Revêtement de sol selon la revendication 4, l'agent ignifugeant additionnel comprenant au moins un agent ignifugeant contenant du phosphore.

6. Revêtement de sol selon la revendication 5, l'agent ignifugeant contenant du phosphore étant choisi parmi le groupe comprenant un phosphate, un phosphite, un phosphonate ou un de ses sels, un phosphonate substitué par un groupement organique ou leurs sels, un phosphinate ou ses sels, un phosphinate substitué par un groupement organique ou ses sels et des mélanges de ceux-ci.

7. Revêtement de sol selon la revendication 5 ou 6, l'agent ignifugeant contenant du phosphore comprenant au moins un phosphinate ou ses sels, un phosphinate substitué par un groupement organique ou ses sels ou un mélange de ceux-ci.

8. Procédé de fabrication d'un revêtement de sol à base de linoléum, comprenant au moins une couche de linoléum, laquelle contient au moins un composé inorganique contenant du silicium comme agent ignifugeant, en une quantité allant jusqu'à 40 % en poids, par rapport au poids de la couche de linoléum, la masse de mélange pour linoléum, laquelle contient au moins un agent ignifugeant, étant travaillée en un revêtement de sol au moyen de calandres ou de laminoirs, le composé inorganique contenant du silicium étant de la perlite.

9. Revêtement de sol à base de liège, comprenant au moins un composé inorganique contenant du silicium comme un agent ignifugeant, en une quantité allant jusqu'à 40 % en poids, par rapport au poids de la couche de liège, le composé inorganique contenant du silicium étant de la perlite.

10. Utilisation d'un composé inorganique contenant du silicium comme un agent ignifugeant dans des revêtements de sol à base de linoléum ou de liège, le composé inorganique contenant du silicium étant de la perlite.
